# EUROPÄISCHE PATENTANMELDUNG

(11) **EP 1 500 334 A1**
(43) Veröffentlichungstag der Anmeldung: **26.01.2005**
(21) Anmeldenummer: 04076855.8
(22) Anmeldetag: 28.06.2004
(51) Int. Cl.: A23L 1/00, A23L 1/164, A21D 13/00, A21D 13/08, A23C 19/093

(54) **Lebensmittelerzeugnis mit Füllung und Verfahren zu dessen Herstellung**

(30) Priorität: 24.07.2003 DE 20311418 U
(71) Anmelder: UNILEVER N.V., 3013 AL Rotterdam (NL); UNILEVER PLC, London EC4P 4BQ (GB)
(72) Erfinder: Miehling, Rainer, 91522 Ansbach (DE)
(74) Vertreter: Wurfbain, Gilles L.

(57) **Zusammenfassung**

Beschrieben wird ein Lebensmittelerzeugnis mit einem Teigmantel und einer eingeschlossenen Füllung. Die Füllung liegt in einem diese vollständig umschließenden Teigmantel vor, der aus einem nicht hefegelockerten Teig gebildet worden ist. Der Teigmantel ist krustenlos und weist eine verhornte glatte Oberfläche auf. Ferner betrifft die Erfindung ein zur Herstellung dieses Lebensmittelerzeugnisses besonders geeignetes Verfahren. Dieses zeichnet sich dadurch aus, dass eine plastische Teigmasse aus einer Mehl enthaltenden Mischung, die gegebenenfalls übliche Zusatzstoffe enthält, mit einer pastösen Füllmasse, die gegebenenfalls neben dem pastösen Grundmaterial kleinstückige Teile eines anderen Lebensmittels enthält, bei erhöhter Temperatur einer Koextrusion unterzogen wird, wobei die pastöse Füllmasse der inneren Düse des Koextruders und die plastische Teigmasse der Manteldüse zugeführt und die Temperatur der Füllmasse in der inneren Düse auf etwa 55 bis 90°C und die Temperatur der plastischen Teigmasse in der Manteldüse auf etwa 85 bis 145°C eingestellt und das austretende Co-Extrudat zur Portionierung und zum Einschluss der Füllmasse abschnittsweise abgedrückt wird. Das beschriebene Lebensmittelerzeugnis stellt eine Alternative zu üblichem Butterbrot dar. Die Füllung vermittelt die sensorischen Eigenschaften üblicher Butterbeläge. Es können herzhafte wie auch süße Füllungen zum Einsatz kommen.

## Beschreibung

Die Erfindung betrifft ein Lebensmittelerzeugnis mit einem Teigmantel und einer eingeschlossenen Füllung sowie ein Verfahren zur Herstellung dieses Lebensmittelerzeugnisses.

Lebensmittelerzeugnisse der oben beschriebenen Art sind bekannt. So gibt es beispielsweise einen Brotkrustenkuchen. Dies ist ein bis auf 2 cm dicken Innenrand ausgehöhltes Brot oder als Hohllaib gebackenes Brot (Hohlbrot), dessen Hohlraum mit ganzen Früchten, pikanten Fleisch-, Wurst- oder Gemüsesalaten gefüllt. Es gibt eine Vielzahl von Imbisserzeugnissen, d.h. kleine Appetithappen, Fix-Fertig-Erzeugnisse, Fingerprodukte, Knuspererzeugnisse, Knabbererzeugnisse, Knabberartikel, Pausengebäck und Snacks, bei denen es sich um Lebensmittel in verschiedenster Form, Zusammensetzung, Geschmacksrichtung und Textur handelt. Sie beruhen vorwiegend auf Getreide-, Stärke-, Kartoffel-, Schalen-, Obst- oder Trockenobstbasis. Produkte dieser Art ergeben sich beispielsweise aus: der DE 690 16 555 T2. Daraus ergibt sich ein Nahrungsmittelprodukt, dass eine feuchtigkeitshaltige Füllung, die in einer brotartigen Hülle eingeschlossen ist, und eine Zwischenschicht, die die Füllung von der brotartigen Hülle trennt, umfasst. Die Zwischenschicht besteht aus einem Kucheneierteig oder Kuchenteig, der beim Backen des Nahrungsmittelprodukts ein Kuchenmaterial mit einem spezifischen Volumen von 1,5 bis 4,0 m³/kg ergibt. Das Kuchenmaterial weist eine voll entwickelte zelluläre Struktur auf.

Bei den Produkten der oben beschriebenen Art hat es sich gezeigt, dass sie insbesondere im Hinblick auf die sensorischen Eigenschaften verbesserungsbedürftig sind. Darüber hinaus soll die Erfindung ein besonders geeignetes Verfahren zur Herstellung eines derartigen Lebensmittelerzeugnisses vorschlagen.

Somit hat sich die vorliegende Erfindung die Aufgabe gestellt, ein Lebensmittelerzeugnis vorzuschlagen, das diesbezüglich zufriedenstellt. Insbesondere bestand die Zielsetzung darin, ein Produkt herzustellen, das als echte Alternative zu üblichem Butterbrot steht. Dabei soll insbesondere die Füllung den sensorischen Eigenschaften aller üblichen Brotbeläge, wie Hart-, Weichkäse, Streichwürste und pflanzliche Brotaufstriche, entsprechen. Auch sollen möglichst herzhafte wie auch süße Füllungen zum Einsatz kommen können. Der Gebäckmantel sollte dabei möglichst die Krumenstruktur eines handelsüblichen Weizenmischbrotes aufweisen.

Gegenstand der Erfindung ist daher ein Lebensmittelerzeugnis mit einem Teigmantel und einer eingeschlossenen Füllung, das dadurch gekennzeichnet ist, dass die Füllung in einem diese vollständig umschließenden Teigmantel, der aus einem nicht hefegelockerten Teig gebildet ist, vorliegt, wobei der Teigmantel krustenlos ist und eine verhornte glatte Oberfläche aufweist.

Für die Erfindung ist es demzufolge wesentlich, dass der die Füllung vollständig umschließende Teigmantel aus einem nicht hefegelockerten Teig gebildet wird. Somit erfolgt bei der Herstellung eines Ausgangsteiges keine Hefelockerung. Mit anderen Worten wird hierzu kein Hefeteig herangezogen, d.h. es handelt sich nicht um einen aus Getreidemehl, Zugussflüssigkeiten ggf. Zutaten bereiteten, mit Hefe gelockerten, relativ zähen Teig, der zur Herstellung von Hefebackwaren (Bäckereiwaren, Brot und brotartigem Gebäck) und Feinbackwaren verwendet wird. Bei der Hefelockerung handelt es sich um einen biologischen Vorgang (Anwendung dieser Technologie beim Sauerteig). Allerdings findet in dem zur Herstellung des erfindungsgemäßen Teigmantels herangezogenen Teig auch keine chemische Lockerung durch Einbeziehung eines Backtriebmittels statt, wie eines Natriumhydrogencarbonats. Die Hefe ist deswegen bei der Herstellung des erfindungsgemäßen Lebensmittelerzeugnisses nicht geeignet, weil bei der später noch angesprochenen Herstellung im Extrusionsverfahren eine Temperatur von etwa 120°C an der inneren Oberfläche des Extrusionskanals herrscht. Bei dieser Temperatur würde die Hefe absterben. Ihre Wirksamkeit endet bei etwa 40 bis 45°C im Rahmen einer Vorgare eines Teiges.

Eine üblicherweise im Rahmen der Erfindung herangezogene Teigmasse zur Ausbildung des Teigmantels enthält neben Wasser insbesondere Getreidemehl. Unter den Getreidemehlen sind insbesondere Weizen- und Roggenmehl bevorzugt, weil diese Mehle über die daraus hergestellte Teigmasse zu besonders günstiger Gashaltigkeit und zu der wünschenswerten Porenstruktur führen, auf die nachfolgend noch eingegangen wird. Grundsätzlich lassen sich alle anderen Getreidemehle heranziehen, wie auch solche die zur Herstellung von Weißbrot dienen.

In Einzelfällen ist von Vorteil, wenn dem nicht hefegelockerten Teig zur Texturbeeinflussung Getreideschot beigegeben wird. Durch dessen Einverleibung erhält das Produkt einen "kernigen Biss". Vorzugsweise entfällt auf ein Gewichtsteil Getreidemehl etwa 0,1 bis 1 Gew.-Teile Getreideschrot, insbesondere 0,2 bis 0,4 Gew.-Teile.

Ansonsten laufen bei der Herstellung der Ausgangsteigmasse für das erfindungsgemäße Lebensmittelerzeugnis keine besonderen Reaktionen ab. In jedem Fall erfolgt, wie bei jedem Teig, eine Vorverkleisterung der Stärke. In Einzelfällen ist es auch von Vorteil, der Teigmasse zur Stabilisierung der Proteinstrukturen des Teigmantels bzw. "Backmantels" Proteine einzuverleiben, insbesondere Sojaproteine, Leguminosenproteine und/oder Milcheiweiße, insbesondere Magermilchpulver. Hieraus ergibt sich der weitergehende Vorteil einer Stabilisierung der Eiweißstruktur, was zu der wünschenswerten Krumenstruktur führt.

Darüber hinaus können der Teigausgangsmasse geschmacksgebende Stoffe, insbesondere Zucker, Salz und/oder Gewürze sowie Aromen, zugegeben werden, wobei sich diese insbesondere in dem Inneren des Teigmantels hiermit auf die gewollte geschmackliche Einstellung auswirken.

Von weiterer Bedeutung ist es für das erfindungsgemäße Lebensmittel, dass der Teigmantel krustenlos ist und eine verhornte glatte Oberfläche aufweist. Dieses Charakteristikum ergibt sich aus dem nachfolgend noch geschilderten bevorzugten Verfahren zur Herstellung des erfindungsgemäßen Lebensmittelerzeugnisses, das auf einer Co-Extrusion beruht. Hierbei herrscht im Extrusionsverfahren eine Temperatur von etwa 120°C an der inneren Oberfläche des Extruders. Dies ist ein wesentlicher Unterschied zur üblichen Herstellung von Brot, wo eine Kruste bei einem Backvorgang zwischen etwa 180 und 280°C entsteht, während das Innere des Brotes aufgrund der relativen Großvolumigkeit im Vergleich zum vorliegenden Produkt eine Temperatur von etwa 100°C oder niedriger zeigt. Bei dem Extrusionsverfahren findet zwar auch eine Art "Backvorgang" statt. Die Porenbildung erfolgt aber erst nach der Entspannung, insbesondere durch das Verdampfen von eingebundenem Wasser. Dem Fachmann ist das Merkmal "krustenlos" als Terminus Technicus verständlich. Ein Synonym ist "rindenlos". So gibt es krustenloses Brot, krustenfreies Laibbrot, rindenfreies Laibbrot, rindenloses Laibbrot, krustenloses Laibbrot, krustenfreies Brot und rindenfreies Brot. Es handelt sich also um ein Brot ohne deutlich erkennbare Kruste bzw. Rinde. Die Teige werden bei niedrigen Temperaturen (um etwa 100 bis 120°C), allerdings unter verlängerter Backzeit (etwa 3 bis 24 Stunden), unter Verwendung von normalen Ölen in Einsatzbackkästen oder beim sogenannten Dampfbackkammer-Verfahren in sogenannten Backröhren (geschlossenen Backkästen) gebacken, wobei der Backvorgang eher mit einem Koch- bzw. Dünstprozess vergleichbar ist. Die hohe Feuchtigkeit, gepaart mit niedriger Temperatur im Backraum im Vergleich zur üblichen Laibbrotherstellung, verhindert eine das Gebäckinnere abschließende Krusten- bzw. Rindenbildung und führt zu einer Bräunung des Gesamtproduktes unter Bildung von Aroma- und Zuckerstoffen. Hier bestehen also gewisse Parallelen zur Ausbildung des Back- bzw. Teigmantels des erfindungsgemäßen Lebensmittelerzeugnisses.

Somit ist der Begriff "krustenlos", der zur Charakterisierung des erfindungsgemäßen Lebensmittelerzeugnisses mit herangezogen wird, hinlänglich klar. Darüber hinaus zeigt der krustenlose Teigmantel eine verhornte, glatte Oberfläche. Wenn hier von "glatt" gesprochen wird, dann schließt das nicht aus, dass vereinzelt kleine Vertiefungen vorliegen, insgesamt jedoch keine bedeutsamen Unebenheiten. Die Verhornung geht auf die gezielte Kombination von Temperatur, Druck und Verkleisterung der Stärke am Düseneintritt zurück. Unter "Verhornung" im Sinne der Erfindung wird verstanden, dass die Oberfläche des erfindungsgemäßen Lebensmittelerzeugnisses eine deutlich feinere Struktur aufweist, insbesondere sich in einer weitgehend glatten Struktur darstellt. Mit anderen Worten findet sich in der verhornten glatten Oberfläche nicht die Porosität, wie sie im Inneren des Teigmantels nach Abschluss des Verfahrens zur Herstellung des erfindungsgemäßen Lebensmittelserzeugnisses ausgebildet wird. Es wird bevorzugt, dass die Schicht mit verhornter Oberfläche eine weitgehend glatte Oberfläche mit vereinzelten Vertiefungen bis zu etwa 2 mm, insbesondere von Vertiefungen von etwa 1,5 bis 1,0 mm und ganz besonders bevorzugt Vertiefungen von etwa 0,5 mm bis 0,2 mm aufweist.

Es besteht demzufolge zwischen der oberen dünnen Schicht mit verhornter glatter Oberfläche und der inneren Teig- bzw. Backmasse des Teigmantels bezüglich der Porosität ein erheblicher Unterschied. Dies äußert sich insbesondere darin, dass die innere Teig- bzw. Backmasse mittel- bzw. feinporig ist. Es wird bevorzugt, dass die Porengröße der inneren Teig- bzw. Backmasse zwischen etwa Porentabelle 3 bis Porentabelle 8, gemessen nach der Porentabelle zur Beurteilung der Porengröße von Gebäcken von H. Dallmann liegt (vgl. "Porentabelle" Versandbuchhandel M. Schäfer, 32712 Detmold). Ganz besonders wird es bevorzugt, wenn die innere Teigmasse eine gleichmäßige Porenstruktur aufweist, insbesondere von Porentabelle 4 bis Porentabelle 6, gemessen nach der angesprochenen Porentabelle.

Der Wassergehalt des Lebensmittelerzeugnisses gemäß der Erfindung ist nicht kritisch limitiert. Es hat sich als vorteilhaft erwiesen, wenn dieser weniger als etwa 45 Gew.-%, insbesondere weniger als etwa 35 Gew.-% beträgt. Ganz besonders wird es bevorzugt, wenn der Wassergehalt weniger als etwa 30 Gew.-% beträgt, insbesondere zwischen etwa 15 bis 25 Gew.-% liegt. Ein Überschreiten des Gesamtwassergehaltes von mehr als 45 Gew.-% würde dazu führen, dass der gesamte Gebäckmantel durchweichen würde. Dies wäre sensorisch nicht mehr akzeptabel. Der angesprochene Rahmen von etwa 15 bis 25 Gew.-% ist deswegen besonders vorteilhaft, weil bei Unterschreiten des Wertes von 15 Gew.-% das Produkt als zu trocken empfunden würde, während der bevorzugte Höchstwert von 25 Gew.-% dazu führt, dass die wünschenswerte sensorische Eigenschaft (insbesondere Mundgefühl) noch sehr vorteilhaft in Erscheinung treten. Die Bestimmung des Gesamtwassergehaltes wird gemessen nach § 35 Lebensmittelbedarfsgütergesetz 0600-3.

Die Art der eingeschlossenen Füllung ist für das erfindungsgemäße Lebensmittelerzeugnis nicht von kritischer Bedeutung. Allerdings ist es von Vorteil, wenn die eingeschlossene Füllung eine bei Raumtemperatur oder erhöhter Temperatur pastöse Füllmasse eines Lebensmittels ist. Dies wirkt sich dann besonders vorteilhaft aus, wenn das erfindungsgemäße Lebensmittelerzeugnis anhand des nachfolgenden beschriebenen und bevorzugten Co-Extrusionsverfahrens hergestellt wird. Wird für die Füllung ein Käse herangezogen, dann wird es besonders bevorzugt, wenn die pastöse Füllmasse ein Schmelzkäse oder eine Käsezubereitung aus den vorstehend bezeichneten schmelzbaren Käsematerialien oder einer bei erhöhter Temperatur pumpfähigen Käsemasse ist, insbesondere in Form eines Hart- oder Schnittkäses.

Hartkäse zeichnen sich durch eine feste Konsistenz und geringen Wassergehalt (Trockenmasse mindestens 60 Gew.-%), durch gleichmäßige Durchreifung der ganzen Masse und lange Haltbarkeit aus. Zu den bekannten Sorten zählen beispielsweise Chester, Bergkäse, Cheddar und Emmentalerkäse. Schnittkäse ist die Bezeichnung für eine Gruppe schnittfester oder halbfester im Trockenmassegehalt zwischen Hart- und Weichkäse liegender Käsesorte. Hierzu zählen fester Schnittkäse (mit festem, schnittfähigem Teig), wie Gouda, Edamer, Tollenser und Stralsunder Käse. Halbfeste Schnittkäse (mit mittelfestem, schnittfähigem Teig), wie Edelpilzkäse, Münster Käse und Butterkäse. Es kommt bei dem Käse nicht auf die Zuordnung zu Hart- bzw. Schnittkäse an, sondern allein darauf, dass er aus den genannten Gründen bei erhöhter Temperatur in eine pumpfähige Käsezubereitung überführt werden kann.

Soll der geschmackliche Eindruck, den das Lebensmittelerzeugnis gemäß der Erfindung beim Verzehr hervorruft, "süß" sein, dann wird als Füllung bzw. als pastöse Füllmasse eine süße Füllung herangezogen, insbesondere auf der Basis eines Früchtepürees, wie insbesondere aus Obst, insbesondere Steinobst, Kernobst und Beeren, wie aber auch exotische Früchte, insbesondere Ananas und Orangen. Die pastöse Füllmasse kann auch auf Schalenfrüchte, wie Erdnüsse und dgl., zurückgehen.

In Einzelfällen wird es gewünscht, dass die pastöse Füllmasse ein Gemüsepüree ist. Dabei unterliegt die Erfindung ebenfalls keinerlei Beschränkung. Entscheidend ist es, dass bei einem ursprünglich zu trockenen Gemüse durch Wasserzugabe das Püree im Rahmen eines Zerkleinerungsprozesses gewonnen wird. Püriertes Gemüse kann beispielsweise zurückgehen auf Pilze, insbesondere in Form von Champignons, auf Wurzelgemüse, wie Rettich, Rote Beete, Sellerie, Schwarzwurzel, Kohlrabi oder Mehrrettich, Knollengemüse, wie Kartoffeln, Knollensellerie und Kohlrabi, Blattgemüse wie Spinat, Mangold, Grünkohl, Kohlrabiblätter, Feldsalat, Endiviensalat, Sauerampfer und Brennesseln, Stengelgemüse, insbesondere Spargel und Chicorée, Zwiebelgemüse, wie Zwiebeln, Lauch und Knoblauch, Fruchtgemüse, wie Gurken, Tomaten, Kürbis und Gemüsepaprika. Es kommen aber auch vielfältig andere Gemüsearten in Frage, wobei es allein wichtig ist, dass, wenn der ursprüngliche Wassergehalt zu niedrig ist, dieser so weit angehoben wird, dass vorzugsweise die angesprochene pastöse Füllmasse im Rahmen der erfindungsgemäßen Lehre verarbeitet werden kann.

Auch kann es wünschenswert sein, dass die pastöse Füllmasse in Form einer Koch- und/oder Streichwurst vorliegt. Kochwurst ist ein aus Schweinefleisch (seltener aus Rindfleisch), Fett, Innereien, Blut und Schlachtabschnitten, wie Schwarten und andere kollagenhaltige Bestandteile von Schlachtkörpern, hergestellte Wurst. Die zerkleinerten Rohstoffe werden vorzugsweise roh, gebrüht oder gegart ("gekocht") und unter Zusatz von Salz und Gewürzen verarbeitet. Beispiele geeigneter Kochwurstarten sind: Leberwurst, Kochmettwurst, Blutwurst, Sülzwurst. Zu den geeigneten Leberwürsten zählen beispielsweise einfache Leberwurst, frische Leberwurst, Schüsselwurst, Gänseleberwurst, Kalbsleberwurst, Zwiebelleberwurst, Champignonleberwurst, Thüringer-Leberwurst, zu den Kochmettwürsten, die Westfälische, gekochte Mettwurst, Hamburger, gekochte Hessische Kartoffelwurst, Hannoversche Bregenwurst, Westfälische Fleischwurst, zu den Blutwurstarten Bauernfleischwurst, einfache Blutwurst, frische Blutwurst mit Semmel oder Grütze, Pressblutwurst (schwarzer Presssack), Thüringer Fleischwurst und zu den Sülzwürsten Schweinskopfsülzwurst, Berliner Presswurst. Darüber hinaus sind jedoch andere Wurstarten geeignet, sofern sie in Form einer mehr oder weniger pastösen Füllmasse bei erhöhter Temperatur und entsprechender Zerkleinerung zugeführt werden können. Hierbei können beispielsweise verschiedene Brühwürste in Frage kommen, wie die fein zerkleinerte Brühwurst, insbesondere Mortadella, Fleischkäse, Leberkäse, Leberpastete, Gelbwurst und Hirnwurst, aber auch Münchner Weißwurst, Italienische Mortadella.

Selbstverständlich können, wenn es geschmacklich einen Sinn gibt, die verschiedenen vorgenannten Füllmassen oder pastösen Füllmassen gemischt werden.

Zur Schaffung einer bestimmten geschmacklichen Ausrichtung kann es vorteilhaft sein, wenn der oben geschilderten Füllung oder pastösen Füllmasse kleinstückige Teile eines anderen Lebensmittels beigegeben werden, insbesondere einer Teilchengröße von nicht mehr als etwa 8 mm, insbesondere von nicht mehr als 3 mm. Die Teilchengröße von etwa 8 mm wird vorzugsweise nicht überschritten, da dann die "Füllbarkeit" nicht stets gewährleistet ist, weil beispielsweise bei der Herstellung des erfindungsgemäßen Erzeugnisses in der Regel mit einer Düsengröße von etwa 8 mm gearbeitet wird. Diese Größeneinstellung steht in Relation zu dem zu verzehrenden Produktformat. Demzufolge bestimmt das Produktformat die Größe der kleinstückigen Teile, so dass in Einzelfällen auch die oben angegebenen bevorzugten Rahmenbedingungen überschritten werden können.

Hierbei wird es besonders bevorzugt, wenn die kleinstückigen Teile in Form von Käse als Hartkäse, von Fleischerzeugnissen als Rohpökelware und/oder als Dauerwurst und von Gemüse als Pilze und/oder vorgetrocknetes Gemüse vorliegen. Wichtig ist es bei dem Einsatz von Hartkäse, dass er solcher Art ist, dass er im Rahmen der Herstellung des erfindungsgemäßen Lebensmittelerzeugnisses nicht selbst in eine pastöse Füllmasse überführt wird, sondern seine Teilchencharakteristik bewahrt. Demzufolge handelt es sich um einen Hartkäse mit besonders hoher Trockenmasse, insbesondere in Form der vorstehend näher bezeichneten Käsearten in Form von Hartkäse, Schnittkäse, halbfestem Schnittkäse und dgl.

Zwar können die Fleischerzeugnisse auch in Form anderer Produkte als Rohpökelware oder als Dauerwurst vorliegen, wobei letztere bevorzugt sind. Rohpökelwaren sind nach den Leitsätzen für Fleischerzeugnisse durch Pökeln oder Salzen haltbar gemachte rohe, abgetrocknete, geräucherte oder ungeräucherte Fleischstücke von stabiler Farbe, typischem Geruch (Pökelaroma) und von einer Konsistenz, die das Anfertigen dünner Schnitte ermöglicht. Rohpökelwaren werden untergliedert nach Zuschnittformen: Rohschinken als geschlossener Schinken (Knochenschinken), Flachschinken (Spalt-, Kern-, Rollschinken) und Teilstückschinken (Schinkenspeck, Nuß- und Lachsschinken, Rinderrauchfleisch). Sonstige Rohpökelwaren, die nicht aus Schinken stammen, sind z.B. Speck, Bauchspeck, Räuchernacken und gepökelte Gänsebrust. Bei Rohschinken wird der Wassergehalt im weichsten (zentralen) Magerfleischanteil (Abtrocknungsgrad) limitiert.

Bei der Dauerwurst kann es sich um eine Rohwurst-Dauerware handeln, die hart und ausgereift ist, oder auch um eine Rohwurst-Hartdauerware, die noch schnittfest ist. Zu den Rohwurst-Dauerwaren, die halb ausgereift sind, zählen insbesondere die Berliner Mettwurst, Heidecker Bauernsalami, Katenrauchwurst, Rindfleischknackwurst, Salami, Schinkenwurst, Cervelatwurst, Schinkenblockwurst, Mettwurst, grobe Westfälische Wurst, rohe Knoblauchwurst, rohe Krakauer, Landjäger, Polnische Knacker, Berliner Knacker, Bauerbratwurst und rohe Debreziner. Zu der Rohwurst-Halbdauerware zählen insbesondere die Berliner Mettwurst, Katenrauchwurst, Blockwurst, Salami, Schinken-Polnische, Schinkenwurst und Cervelatwurst. Wenn in Einzelfällen eine Wurst nicht unmittelbar diesen Begriffen unterzuordnen ist, so ist dies unbedeutend. So lassen sich grundsätzlich Fleischereierzeugnisse bzw. Wurstwaren einsetzen, die die erforderliche Festigkeit und Konsistenz auch bei höheren Temperaturen aufweisen, so dass sie mit ihrer Teilchenform im fertigen erfindungsgemäßen Lebensmittelerzeugnis bemerkbar sind.

Bevorzugt werden als Gemüse Pilze und/oder vorgetrocknetes Gemüse eingesetzt, wobei hierein keine Beschränkung gesehen werden soll. Die Pilze liegen vorzugsweise in Form von Champignons vor, während das vorgetrocknete Gemüse in Form von Wurzelgemüse, Knollengemüse, Blattgemüse, Stengelgemüse und/oder Fruchtgemüse vorliegt. Zu den insbesondere hierbei in Frage kommenden Gemüsesorten zählen die vorstehend bereits im Zusammenhang mit diesen Begriffen erwähnten besonderen Gemüsearten.

Auch die Menge der vorzugsweise in die angesprochene pastöse oder bei erhöhter Temperatur pumpfähige Füllmasse einverleibten kleinstückigen Teile ist nicht kritisch. Es wird bevorzugt, wenn darin die kleinstückigen Teile in einer Menge von etwa 5 bis 25 Gew.-%, insbesondere von etwa 8 bis 12 Gew.-% vorliegen. Wird dieser Rahmen eingehalten, dann führt das dazu, dass sich eine visuell gut annehmbare Struktur einstellt. Dies gilt sowohl für das Betrachten als auch für die haptische Wahrnehmung.

In Einzelfällen wird es noch gewünscht, dass die kleinstückigen Teilchen im wesentlichen aus einer Mischung Käse- und Fleischerzeugnisse, insbesondere von Salami und/oder Schinkenstücken, vorliegen. Um zu einer besonderen geschmacklichen Ausrichtung des erfindungsgemäßen Lebensmittels zu erlangen, ist es vorteilhaft, wenn der Füllung Gewürze bzw. Aromen und dgl. beigegeben werden, insbesondere zur Einstellung eines herzhaften Geschmackes. Hierbei wird die Füllung vorzugsweise mit Muskat, Knoblauch, Pfeffer, Koreander, Paprikapulver und/oder Rosmarinextrakt gewürzt.

Das fertige erfindungsgemäße Erzeugnis ist für eine hinlänglich lange Zeit haltbar. Es empfiehlt sich, dieses in einer Schutzgasatmosphäre, beispielsweise aus Stickstoff, zu verpacken, so dass eine Haltbarkeit von mindestens etwa 22 Wochen erzielbar ist. Wenn eine derartige Schutzgasatmosphäre nicht herangezogen wird, dann kann das dazu führen, dass bei der Einverleibung von Fleischerzeugnissen, insbesondere Salami, eine nachteilige Fettoxidation auftritt. Beim Einsatz von Salami kann auch eine unerwünschte Vergrauung eintreten, wenn auf die Ausbildung der angesprochenen Schutzgasatmosphäre verzichtet wird.

Nachfolgend soll auf weitere Produkteigenschaften eingegangen werden: Es wird bevorzugt, dass der A_{w}-Wert kleiner als etwa 0,95, insbesondere kleiner als 0,9 ist, der nach § 35 Lebensmittelbedarfsgütergesetz 06.00-2 gemessen wird. Es wird bevorzugt, wenn der pH-Wert des erfindungsgemäßen Erzeugnisses, insbesondere der Füllung auf einen Wert von kleiner als oder gleich etwa 5,3 eingestellt wird, um eine mikrobiologische Stabilisierung zu erzielen.

Dem Fachmann ist es ohne weiteres möglich, das erfindungsgemäße Lebensmittelerzeugnis anhand der vorstehenden Angaben unter Nutzung des nachfolgend beschriebenen Co-Extrusionsverfahrens herzustellen. Dieses soll im Einzelnen wie folgt beschrieben werden:

Ein besonders geeignetes Verfahren zur Herstellung des erfindungsgemäßen Lebensmittels ist dadurch gekennzeichnet, dass eine plastischer Teigmasse aus einer Mehl enthaltenden Mischung, die gegebenenfalls übliche Zusatzstoffe enthält, mit einer pastösen Füllmasse, die gegebenenfalls neben dem pastösen Grundmaterial kleinstückige Teilchen eines anderen Lebensmittels enthält, bei erhöhter Temperatur einer Koextrusion unterzogen wird, wobei die pastöse Füllmasse der inneren Düse des Koextruders und die plastische Teigmasse der Manteldüse zugeführt und die Temperatur der Füllmasse in der inneren Düse auf etwa 55 bis 90°C und die Temperatur der Teigmasse in der Manteldüse auf etwa 85 bis 145°C eingestellt und das austretende Co-Extrudat zur Portionierung und zum Einschluss der Füllmasse abschnittsweise abgedrückt wird.

Nach Abschluss der Portionierung kann das erfindungsgemäße Lebensmittel in üblicher Weise abgekühlt werden, vorzugsweise auf eine Temperatur von etwa 10 bis 30°C, insbesondere auf etwa 13 bis 18°C. Es wird bevorzugt, das portionierte Lebensmittel durch Trocknen auf einen Endwassergehalt von weniger als etwa 45 Gew.-%, insbesondere weniger als etwa 35 Gew.-%, einzustellen. Das Trocknen erfolgt beispielsweise durch Durchlauftrockner und/oder Chargentrockner.

Bei einer besonders vorteilhaften Ausgestaltung des erfindungsgemäßen Verfahrens wird die plastische Teigmasse vor Eintrag in die Manteldüse des Co-Extruders in vorgeschalteten Extruderblöcken, die eine ansteigende Temperatur aufweisen, auf die gewünschte Eintragstemperatur erhitzt, insbesondere auf die Eintragstemperatur von etwa 85 bis 145°C. Bevorzugt ist es, dass die pastöse Teigmasse durch vorgeschaltete Aufheizmaßnahmen behandelt wird, um dann bei der gewünschten erhöhten Temperatur in den Co-Extruder eingetragen zu werden. Bei dieser vorgeschalteten Wärmebehandlung kann es sich insbesondere um eine "Kochextrusion" handeln. Hierzu können die folgenden Prozessparameter angegeben werden: Standard-Schneckenkonfiguration: Block 2 und 3 etwa 50 bis 70°C, insbesondere 60°C, Block 4 etwa 100 bis 120°C, insbesondere etwa 110°C, Block 5 etwa 105 bis 125°C, insbesondere etwa 115°C.

Es ist bevorzugt, dass die plastische Teigmasse bei Eintrag in die Manteldüse des Co-Extruders einen Wassergehalt von etwa 6 bis 18 Gew.-%, insbesondere etwa 12 bis 16 Gew.-% aufweist. Der Fachmann wird diesen vorteilhaften Wassergehalt bei der Herstellung der Ausgangsmischung für die plastische Teigmasse und die pastöse Füllmasse berücksichtigen. In einzelnen Fällen ist die Füllmasse, die im Rahmen des erfindungsgemäßen Verfahrens herangezogen wird, bei Raumtemperatur fest. Um sie pumpfähig bzw. pastös zu machen, was erfindungsgemäß erforderlich ist, erfolgt ein Vorerhitzen auf etwa 40 bis 85°C, insbesondere auf etwa 45 bis 55°C. Die Zusammensetzung der Füllmasse und der plastischen Teigmasse kann vorteilhaft dadurch modifiziert werden, dass ihnen Zusatzstoffe beigefügt werden. So können der plastischen Teigmasse zur Stabilisierung der Struktur des späteren Teigmantels Proteine, insbesondere Sojaprotein, Leguminosenprotein und/oder Milcheiweiß, zugegeben werden, des Weiteren geschmacksgebende Stoffe, wie insbesondere Zucker, Salz und/oder Gewürze bzw. Aromen. Um die Füllung geschmacklich zu modifizieren bzw. wunschgemäß einzustellen, können der pastösen bzw. pumpfähigen Füllmasse im Rahmen des erfindungsgemäßen Verfahrens Zusatzstoffe in Form von Käse, Früchtepüree, Koch- und/oder Streichwurst sowie Gemüsepüree beigegeben werden. Die letzteren können in kleinstückiger Form vorliegen. Eine Teilchengröße von nicht mehr als etwa 8 mm, insbesondere von nicht mehr als etwa 3 mm ist bevorzugt.

Bei einem konkreten Verfahren, das dem Grundgedanken der erfindungsgemäßen Verfahrenslehre folgt und bevorzugte Ausgestaltungen einbezieht, wird wie folgt vorgegangen: Ausgegangen wird von einem geeigneten Mehl, das auf einen Wassergehalt von etwa 12 bis 16 Gew.-% eingestellt ist. Dieses "feuchte" Mehl, gegebenenfalls mit einbezogenen Zusatzstoffen, wird in einer Misch- oder Kneteeinheit auf eine Temperatur von etwa 115 bis 125°C erhitzt. Dieses Material wird gleichzeitig mit einem pastösen Füllmaterial einem Co-Extruder zugeführt. Das pastöse Füllmaterial in der Innendüse wird auf eine Temperatur von etwa 70 bis 75°C eingestellt. Aus dem Co-Extruder tritt ein Co-Extrusionsstrang aus. Mit anderen Worten wird der mittlere Teil des Co-Extrusionsstranges mit der pastösen Füllmasse ausgefüllt, während dieser von dem späteren Krumenmantel aus der plastischen Teigmasse umschlossen ist. Es schließt sich die Behandlung mittels einer Quetschwalze an, um die Portionen, insbesondere in geeigneter Größe, herzustellen und insbesondere den vorderen und hinteren Verschluss des jeweiligen Erzeugnisses zu gewährleisten. Somit wird die pastöse Mischung bzw. pastöse Füllmasse vollständig von dem Teigmantel umhüllt. Es schließt sich ein Kühlen auf insbesondere Raumtemperatur an, indem die noch warmen Teile in einem Kühlraum von etwa 15°C überführt werden. Danach folgt ein übliches Trocknen auf den gewünschten Wassergehalt. Das erhaltene Produkt wird in einer Primärverpackung untergebracht. Dies erfolgt vorzugsweise in einer Schutzgasatmosphäre. Dabei sollte ein Restsauerstoffgehalt von möglichst weniger als 1% eingestellt werden.

Die wesentlichen Vorteile der Erfindung bestehen insbesondere darin, dass das Lebensmittelerzeugnis gemäß der Erfindung eine wertvolle Alternative zum üblichen Butterbrot darstellt. Zudem vermittelt seine Füllung die sensorischen Eigenschaften üblicher Butterbeläge. Hierbei besteht eine gewisse Flexibilität. So können z.B. herzhafte wie auch süße Füllungen zum Einsatz kommen. Dieses Lebensmittelerzeugnis lässt sich besonders günstig anhand des Verfahrens gemäß der Erfindung herstellen.

Nachfolgend wird die Erfindung anhand verschiedener Beispiele noch näher erläutert.

### Beispiel 1

Vorstehend wurde das Verfahren, nach dem das erfindungsgemäße Erzeugnis hergestellt wurden, beschrieben. Dieses soll hier entsprechend angewandt werden. Nachfolgende Rezepturen wurden dabei herangezogen:

| Trockenmischung der späteren Teigmasse | |
|---|---|
| Weizenmehl | 62,0 % |
| Weizenschrot fein | 30,0 % |
| Magermilchpulver | 4,0 % |
| Zucker | 2,0 % |
| Salz | 1,0 % |

| Füllung - Salami/Schmelzkäse | |
|---|---|
| Chester (50%) | 38,5 % |
| Butter | 7,5 % |
| Maisölemulsion | 27,5 % |
| Molkenpulver | 4,0 % |
| Kochsalz | 0,2 % |
| Schmelzsalze (Phosphate) | 2,0 % |
| Aroma (Käsearoma) | 0,2 % |
| Cellulosederivat (Bindemittel) | 0,5 % |
| Wasser | 10,5 % |
| Salami (feinstückige Teilchen) | 9,1 % |

### Beispiel 2

Das Beispiel 1 wurde bezüglich der Füllung wie folgt geändert:

| Gemüse/Speck-Füllung: | |
|---|---|
| Schweinespeck | 60,0 % |
| Pflanzenfett | 30,0 % |
| Gemüse (trocken) (Karotten) | 4,5 % |
| Kochsalz | 2,8 % |
| Zitronensäure | 0,1 % |
| Gewürze (Pfeffer, Koreander) | 1,6 % |
| Aroma (Gemüsearoma) | 1,0 % |

### Beispiel 3

Das Beispiel 1 wurde bezüglich der Füllung wie folgt geändert:

| Schinken/Käsezubereitung-Füllung: | |
|---|---|
| Chester (50%) | 38,5 % |
| Butter | 7,5 % |
| Maisölemulsion | 27,5 % |
| Molkepulver | 4,0 % |
| Kochsalz | 0,2 % |
| Xanthan | 2,0 % |
| Aroma (Schinkenaroma) | 0,2 % |
| Cellulosederivat (Bindemittel) | 0,5 % |
| Wasser | 10,5 % |
| Schinken (feinteilig) | 9,1 % |

### Beispiel 4

Das Beispiel 1 wurde bezüglich der Füllung wie folgt geändert:

| Tomaten-Gemüse Füllung: | |
|---|---|
| Tomatenmark | 55,0 % |
| Pflanzenöl | 21,0 % |
| Glucose | 12,0 % |
| Xanthan | 1,5 % |
| Trockengemüse | 8,5 % |
| Gewürze (Pfeffer, Koreander) | 2,0 % |

### Beispiel 5

Das Beispiel 1 wurde bezüqlich der Füllung wie folgt geändert:

| Leberwurst-Füllung: | |
|---|---|
| Kalbfleisch | 23,0 % |
| Schweinefleisch | 20,0 % |
| Speck | 22,0 % |
| Schweineleber | 25,0 % |
| Wasser | 6,4 % |
| Gewürze | 1,5 % |
| Hühnervolleipulver | 0,5 % |
| Emulgator (Mono- und Diglyzerin) | 0,7 % |
| Glucose | 0,3 % |
| Natriumascorbat | 0,1 % |
| Natriumnitrit | 0,5 % |

### Beispiel 6

Das Beispiel 1 wurde bezüglich der Füllung wie folgt geändert:

| Erdbeer-Füllung: | |
|---|---|
| Käsezubereitung | 40,0 % |
| Pflanzenfett | 20,0 % |
| Maisölemulsion | 12,0 % |
| Zucker | 8,0 % |
| Molkenpulver | 5,0 % |
| Xanthan | 2,0 % |
| Erdbeeren getrocknet | 5,0 % |
| Aroma (Erdbeeraroma) | 1,0 % |
| Wasser | 7,0 % |

## Patentansprüche

1. Lebensmittelerzeugnis mit einem Teigmantel und einer eingeschlossenen Füllung, **dadurch gekennzeichnet, dass** die Füllung in einem diese vollständig umschließenden Teigmantel, der aus einem nicht hefegelockerten Teig gebildet ist, vorliegt, wobei der Teigmantel krustenlos ist und eine verhornte glatte Oberfläche aufweist.

2. Lebensmittelerzeugnis nach Anspruch 1, **dadurch gekennzeichnet, dass** der nicht hefegelockerte Teig auf Getreidemehl, insbesondere Weizen- und/oder Roggenmehl, beruht.

3. Lebensmittelerzeugnis nach Anspruch 1 oder 2, **dadurch gekennzeichnet, dass** der nicht hefegelockerte Teig zur Texturbeeinflussung Getreideschrot enthält.

4. Lebensmittelerzeugnis nach einem der Ansprüche 1 bis 3, **dadurch gekennzeichnet, dass** die innere Teigmasse des Teigmantels zur Stabilisierung der Struktur Proteine enthält, insbesondere Sojaproteine, Leguminosenproteine und/oder Milcheiweiße, insbesondere Magermilchpulver.

5. Lebensmittelerzeugnis nach mindestens einem der vorhergehenden Ansprüche, **dadurch gekennzeichnet, dass** die innere Teigmasse des Teigmantels geschmacksgebende Stoffe, insbesondere Zucker, Salz, Gewürze bzw. Aromen enthält.

6. Lebensmittelerzeugnis nach mindestens einem der vorhergehenden Ansprüche, **dadurch gekennzeichnet, dass** die Schicht mit verhornter Oberfläche eine weitgehend glatte Oberfläche, mit vereinzelten Vertiefungen bis zu etwa 2 mm, insbesondere Vertiefungen von etwa 0,5 mm bis 0,2 mm aufweist.

7. Lebensmittelerzeugnis nach mindestens einem der vorhergehenden Ansprüche, **dadurch gekennzeichnet, dass** die innere Teigmasse mittel- bzw. feinporig ist.

8. Lebensmittelerzeugnis nach Anspruch 7, **dadurch gekennzeichnet, dass** die Porengröße der inneren Teigmasse zwischen etwa Porentabelle 3 bis Porentabelle 8, gemessen nach der Porentabelle zur Beurteilung der Porengröße von Gebäcken von H. Dallmann, liegt.

9. Lebensmittelerzeugnis nach Anspruch 8, **dadurch gekennzeichnet, dass** die innere Teigmasse eine gleichmäßige Porenstruktur aufweist, insbesondere von Porentabelle 4 bis Porentabelle 6, gemessen nach der Porentabelle zur Beurteilung der Porengröße von Gebäcken von H. Dallmann.

10. Lebensmittelerzeugnis nach mindestens einem der vorhergehenden Ansprüche, **dadurch gekennzeichnet, dass** der Gesamtwassergehalt weniger als etwa 45 Gew.-%, insbesondere weniger als etwa 35 Gew.-% beträgt.

11. Lebensmittelerzeugnis nach Anspruch 10, **dadurch gekennzeichnet, dass** der Wassergehalt weniger als etwa 30 Gew.-% beträgt, insbesondere zwischen etwa 15 bis 25 Gew.-% liegt.

12. Lebensmittelerzeugnis nach mindestens einem der vorhergehenden Ansprüche, **dadurch gekennzeichnet, dass** die eingeschlossene Füllung eine bei Raumtemperatur oder erhöhter Temperatur pastöse Füllmasse eines Lebensmittels ist.

13. Lebensmittelerzeugnis nach Anspruch 12, **dadurch gekennzeichnet, dass** die pastöse Füllmasse ein Schmelzkäse oder eine bei erhöhter Temperatur pumpfähige Käsezubereitung ist.

14. Lebensmittelerzeugnis nach Anspruch 13, **dadurch gekennzeichnet, dass** die bei erhöhter Temperatur pumpfähige Käsezubereitung in Form von Hart- und/oder Schnittkäse vorliegt.

15. Lebensmittelerzeugnis nach Anspruch 12, **dadurch gekennzeichnet, dass** die pastöse Füllmasse eine süße Füllung darstellt, insbesondere auf der Basis eines Früchtepürees.

16. Lebensmittelerzeugnis nach Anspruch 12, **dadurch gekennzeichnet, dass** die pastöse Füllmasse in Form von Kochund/oder Streichwurst vorliegt.

17. Lebensmittelerzeugnis nach Anspruch 12, **dadurch gekennzeichnet, dass** die pastöse Füllmasse ein Gemüsepüree ist.

18. Lebensmittelerzeugnis nach mindestens einem der Ansprüche 12 bis 17, **dadurch gekennzeichnet, dass** die eingeschlossene Füllung kleinstückige Teile eines anderen Lebensmittels enthält, insbesondere einer Teilchengröße von nicht mehr als etwa 8 mm, insbesondere von nicht mehr als etwa 3 mm.

19. Lebensmittelerzeugnis nach Anspruch 18, **dadurch gekennzeichnet, dass** die kleinstückigen Teile in Form von Käse als Hartkäse, von Fleischerzeugnissen als Rohpökelware und/oder als Dauerwurst, von Gemüse als Pilze und/oder von vorgetrocknetem Gemüse vorliegen.

20. Lebensmittelerzeugnis nach Anspruch 19, **dadurch gekennzeichnet, dass** das vorgetrocknete Gemüse in Form von Wurzel-, Knollen-, Blatt-, Stengel- und/oder Fruchtgemüse vorliegt.

21. Lebensmittelerzeugnis nach Anspruch 19, **dadurch gekennzeichnet, dass** die Pilze in Form von Champignons vorliegen.

22. Lebensmittelerzeugnis nach mindestens einem der Ansprüche 18 bis 21, **dadurch gekennzeichnet, dass** die kleinstückigen Teilchen in der eingeschlossenen Füllung in einer Menge von etwa 5 Gew.-% bis 25 Gew.-%, insbesondere von etwa 8 Gew.-% bis 12 Gew.-% vorliegen.

23. Lebensmittelerzeugnis nach mindestens einem der Ansprüche 18 bis 22, **dadurch gekennzeichnet, dass** die kleinstückigen Teilchen im Wesentlichen aus einer Mischung von Käse- und Fleischerzeugnissen, insbesondere von Salami- und/oder Schinkenstücken, vorliegen.

24. Lebensmittelerzeugnis nach mindestens einem der vorhergehenden Ansprüche, **dadurch gekennzeichnet, dass** die eingeschlossene Füllung mit Muskat, Knoblauch, Pfeffer, Koreander, Paprikapulver und/oder Rosmarinextrakt gewürzt ist, insbesondere zur Einstellung eines herzhaften Geschmacks.

25. Verfahren zur Herstellung eines Lebensmittelerzeugnisses nach mindestens einem der Ansprüche 1 bis 24, **dadurch gekennzeichnet, dass** eine plastische Teigmasse aus einer Mehl enthaltenden Mischung, die gegebenenfalls übliche Zusatzstoffe enthält, mit einer pastösen Füllmasse, die gegebenenfalls neben dem pastösen Grundmaterial kleinstückige Teile eines anderen Lebensmittels enthält, bei erhöhter Temperatur einer Koextrusion unterzogen wird, wobei die pastöse Füllmasse der inneren Düse des Koextruders und die plastische Teigmasse der Manteldüse zugeführt und die Temperatur der Füllmasse in der inneren Düse auf etwa 55 bis 90°C und die Temperatur der plastischen Teigmasse in der Manteldüse auf etwa 85 bis 145°C eingestellt und das austretende Co-Extrudat zur Portionierung und zum Einschluss der Füllmasse abschnittsweise abgedrückt wird.

26. Verfahren nach Anspruch 25, **dadurch gekennzeichnet, dass** das portionierte Lebensmittel auf eine Temperatur von etwa 10 bis 30°C, insbesondere auf etwa 13 bis 18°C gekühlt wird.

27. Verfahren nach Anspruch 25 oder 26, **dadurch gekennzeichnet, dass** das portionierte Lebensmittel zur Einstellung des gewünschten Endwassergehaltes von weniger als 45 Gew.-%, insbesondere weniger als etwa 35 Gew.-%, getrocknet wird.

28. Verfahren nach mindestens einem der Ansprüche 25 bis 27, **dadurch gekennzeichnet, dass** die plastische Teigmasse vor Eintrag in die Manteldüse des Co-Extruders in vorgeschalteten Extruderblöcken ansteigender Temperatur auf die gewünschte Eintragstemperatur erhitzt wird.

29. Verfahren nach Anspruch 28, **dadurch gekennzeichnet, dass** insgesamt drei Extruderblöcke zum Aufheizen der plastischen Teigmasse eingesetzt werden, wobei der erste Extruderblock die plastische Teigmasse auf etwa 50 bis 70°C, der zweite Extruderblock auf etwa 100 bis 115 und der dritte Extruderblock auf etwa 125°C aufheizt.

30. Verfahren nach mindestens einem der Ansprüche 25 bis 29, **dadurch gekennzeichnet, dass** die plastische Teigmasse, die der Manteldüse zugeführt wird, einen Wassergehalt von etwa 6 bis 18 Gew.-%, insbesondere etwa 12 bis 16 Gew.-% aufweist.

31. Verfahren nach mindestens einem der Ansprüche 25 bis 30, **dadurch gekennzeichnet, dass** die pastöse Füllmasse für den Fall, dass sie bei Raumtemperatur fest ist, zur Einstellung der Pumpfähigkeit auf etwa 40 bis 85°C, insbesondere etwa 45 bis 55°C vorerhitzt wird.

32. Verfahren nach mindestens einem der Ansprüche 25 bis 31, **dadurch gekennzeichnet, dass** der plastischen Teigmasse zur Stabilisierung der Struktur des Teigmantels Proteine, insbesondere Sojaproteine, Legominosenproteine und/oder Milcheiweiß, sowie geschmacksgebende Stoffe, insbesondere Zucker, Salz und/oder Gewürze bzw. Aromen, einverleibt werden.

33. Verfahren nach mindestens einem der Ansprüche 25 bis 32, **dadurch gekennzeichnet, dass** die pastöse und pumpfähige Füllmasse auf Basis von Käse, Früchtepüree, Gemüsepüree, Kochund/oder Streichwurst vorliegt.

34. Verfahren nach mindestens einem der Ansprüche 25 bis 33, **dadurch gekennzeichnet, dass** der pastösen Füllmasse kleinstückige Teilchen eines anderen Lebensmittels einer Teilchengröße von nicht mehr als etwa 8 mm, insbesondere von nicht mehr als etwa 3 mm, einverleibt werden.
